Europäisches Patentamt

European Patent Office

Office européen des brevets

(11) Veröffentlichungsnummer: **0 378 772**
**A1**

(19)

(12) **EUROPÄISCHE PATENTANMELDUNG**

(21) Anmeldenummer: 89120823.3

(22) Anmeldetag: 10.11.89

(51) Int. Cl.⁵: **F16K 25/02, F16K 39/00**

(30) Priorität: 16.12.88 DE 3842431

(43) Veröffentlichungstag der Anmeldung:
25.07.90 Patentblatt 90/30

(84) Benannte Vertragsstaaten:
BE CH DE ES FR GB IT LI NL SE

(71) Anmelder: FLUTEC FLUIDTECHNISCHE
GERÄTE GMBH
Justus-von-Liebig-Strasse
D-6603 Sulzbach/Saar(DE)

(72) Erfinder: Stuck, Otfried, Dipl.-Ing.
Am Rischbacher Rech 64
D-6670 St. Ingbert(DE)
Erfinder: Bär, Harald, Dipl.-Ing.
Weiherbergstrasse 110
D-6626 Püttlingen(DE)

(74) Vertreter: Patentanwälte Phys. Bartels
Dipl.-Ing. Fink Dr.-Ing. Held
Lange Strasse 51
D-7000 Stuttgart 1(DE)

(54) Verfahren zur Kompensation von Strömungskräften in einem Hydraulikventil und Hydraulikventil zur Durchführung des Verfahrens.

(57) Zur Kompensation von Strömungskräften an Steuerkanten (15) von Hydraulikventilen wird aufgrund der Drücke in dem von der Steuerkante (15) beeinflußten Strömungsquerschnitt (14) einerseits und an einer benachbarten Kolbenaußenfläche (12) andererseits ein Mischdruck an einer Fläche (11) des Kolbens (15) wirksam gemacht, der zumindest eine Kraftkomponente in Schließrichtung des Kolbens (15) ergibt. Bei einem Hydraulikventil zur Durchführung dieses Verfahrens ist der Kolben (5) mit wenigstens zwei Kanälen (16, 18) versehen, die in einer kolbenseitig den mittels der Steuerkante (15) veränderbaren Strömungsquerschnitt begrenzenden Fläche (13) bzw. in einer dieser Fläche benachbarten Kolbenaußenfläche (12) einerseits und in derjenigen Kolbenfläche (11) andererseits münden, welche zusammen mit einem den Kolben (5) enthaltenden Gehäuse (1) einen sich an die Kolbenrückseite (11) anschließenden Raum (21) begrenzt.

Fig.1

## Verfahren zur Kompensation von Strömungskräften in einem Hydraulikventil und Hydraulikventil zur Durchführung des Verfahrens

Die Erfindung betrifft ein Verfahren zur Kompensation von auf den Kolben eines Hydraulikventiles wirkenden Strömungskräften sowie ein Hydraulikventil zur Durchführung dieses Verfahrens.

Beim Durchfluß einer Hydraulikflüssigkeit durch ein Hydraulikventil entsteht in dem von der Steuerkante des Ventils beeinflußten Strömungquerschnitt eine Strömungskraft, die bestrebt ist, den Kolben des Ventils in Richtung zum Ventilsitz hin zu verschieben. Um dies zu verhindern, muß der Kolben mit einer entsprechend großen Kraft festgehalten werden, die vom Betätigungsmechanismus des Ventils aufzubringen ist. Da vor allem die für direkt gesteuerte Ventile üblicherweise verwendeten Betätigungsmechanismen relativ geringe Stellkräfte aufweisen, kann eine Erhöhung des zulässigen Druckmittelstromes wegen der damit verbundenen Vergrößerung der Strömungskräfte unmöglich sein.

Der Erfindung liegt daher die Aufgabe zugrunde, ein Verfahren aufzuzeigen, das es ermöglicht, die in einem Hydraulikventil auftretenden Strömungskräfte auf einfache Weise wenigstens teilweise zu kompensieren, um die vom Betätigungsmechanismus aufzubringende Kraft zu reduzieren oder den Druckmittelstrom vergrößern zu können.

Diese Aufgabe löst ein Verfahren mit den Merkmalen des Anspruches 1.

Dadurch, daß erfindungsgemäß an der Rückseite des Kolbens ein Mischdruck erzeugt wird, der auch von demjenigen Druck abhängig ist, der in dem Strömungsquerschnitt herrscht, der von der Steuerkante des Kolbens beeinflußt ist, läßt sich in einfacher Weise die für eine wenigstens unvollständige Kompensation der Strömungskräfte erforderliche Kraft aus diesem Mischdruck gewinnen.

Bei einer bevorzugten Ausführungsform wird bei der Bildung des Mischdruckes zumindest der eine der beiden Drücke gewichtet. Hierdurch ist es in einfacher Weise möglich, den Zusammenhang zwischen Strömungskraft und Mischdruck den Erfordernissen anzupassen.

Der Erfindung liegt auch die Aufgabe zugrunde, ein Hydraulikventil zur Durchführung des erfindungsgemäßen Verfahrens zu schaffen. Diese Aufgabe löst ein Hydraulikventil mit den Merkmalen des Anspruches 3.

Diese Lösung bietet den Vorteil, daß keine zusätzlichen Bauteile notwendig sind, vielmehr nur der Kolben mit den erforderlichen Kanälen versehen sein muß. Der Raumbedarf wird deshalb nicht vergrößert, und auch der Fertigungsaufwand ist nur durch den für die Kanäle erforderlichen, in der Regel relativ geringen Anteil größer als bei den entsprechenden bekannten Hydraulikventilen.

Die Gewichtung des einen oder beider Drücke erfolgt vorzugsweise durch Blenden, welche in den entsprechenden Kanal des Kolbens einsetzbar sind. Durch einen Austausch einer solchen Blende kann die Gewichtung in einfacher Weise verändert werden.

Bei einer bevorzugten Ausführungsform ist die kolbenseitig den veränderbaren Strömungsquerschnitt begrenzende Fläche eine Konus- oder Kegelfläche. In der Regel wird diese Fläche sich zwischen der Stirnfläche und der Steuerkante erstrecken.

Man kann aber auch gemäß Anspruch 8 die Steuerkante und eine im Abstand von dieser angeordnete zusätzliche Kante durch je eine Materialpartie des Gehäuses bilden. In diesem Falle ist vorteilhafterweise die Mündungsöffnung jedes der Übertragung des Druckes in dem von der Steuerkante beeinflußten Strömungsquerschnitt dienenden Kanals in der im Anspruch 8 definierten Position angeordnet.

Um eine unterschiedliche Druckverteilung über den Umfang des von der Steuerkante beeinflußten Strömungsquerschnitts erfassen zu können ist es vorteilhaft, mehrere gemäß Anspruch 9 verteilt angeordnete Mündungsöffnungen vorzusehen. Statt dessen kann man aber auch gemäß Anspruch 10 eine Ringnut vorsehen, an die sich ein ringförmiger Verteilerraum anschließt. In der Regel genügt dann ein einziger Kanal, um diesen Verteilerraum mit dem Raum an der Rückseite des Kolbens zu verbinden. Konstruktiv lassen sich eine solche Ringnut und ein Verteilerraum in besonders einfacher Weise gemäß Anspruch 12 mit Hilfe eines gebauten Kolbens realisieren.

Durch eine Vertiefung in der Stirnseite des Kolbens gemäß Anspruch 13 läßt sich in einfacher Weise eine Beeinträchtigung der Druckerfaßung an der Kolbenstirnseite durch sich mit dem Kolbenhub ändernde Strömungsformen verhindern.

Im folgenden ist die Erfindung anhand von in der Zeichnung dargestellten Ausführungsbeispielen im einzelnen erläutert. Es zeigen

Fig. 1 einen Längsschnitt eines ersten Ausführungsbeispiels mit zugehörigem, in Ansicht dargestelltem Betätigungsmechanismus,

Fig. 2 einen unvollständig dargestellten Längsschnitt eines zweiten Ausführungsbeispiels,

Fig. 3 einen unvollständig dargestellten Längsschnitt eines dritten Ausführungsbeispiels,

Fig. 4 einen Längsschnitt eines vierten Ausführungsbeispiels.

Ein Hydraulikventil mit einem Ventilgehäuse 1, an dessen eine Stirnseite ein Ventilbetätigungsmechanismus 2 angebaut ist, ist mit einer zentralen Längsbohrung 3 versehen, die sich bis zu einem zu ihr konzentrisch angeordneten, konischen Sitz 4 erstreckt, dessen kleinster Durchmesser kleiner und dessen größter Durchmesser größer ist als der Durchmesser der zentralen Längsbohrung 3 und eines in dieser längsverschiebbar angeordneten Kolbens 5. Vom Sitz 4 bis zu der vom Betätigungsmechanismus 2 wegweisenden Stirnseite des Ventilgehäuses 1 erstreckt sich gleichachsig zur zentralen Längsbohrung 3 ein Kanal 6, durch den das Druckmittel in das Ventilgehäuse 1 eintritt oder aus diesem austritt. An die im Durchmesser größere Seite des Sitzes 4 schließt sich ein konzentrischer Ringraum 7 an, dessen Durchmesser gleich dem größten Durchmesser des Sitzes 4 ist. In diesen Ringraum 7 mündet ein radial bezüglich der zentralen Längsbohrung 3 verlaufender Kanal 8, durch den das Druckmittel austritt oder eintritt.

Der längsverschiebbar, aber abgedichtet in der zentralen Längsbohrung 3 geführte Kolben 5 ist über eine zentral angeordnete Verbindungsstange 9 mit dem Betätigungsmechanismus 2 verbunden. Eine Schraubendruckfeder 10 umgibt die Verbindungsstange 9 im Abstand und ist einerseits am Betätigungsmechanismus 2, andererseits an der im Abstand vom Betätigungsmechanismus 2 liegenden Rückseite 11 des Kolbens 5 abgestützt.

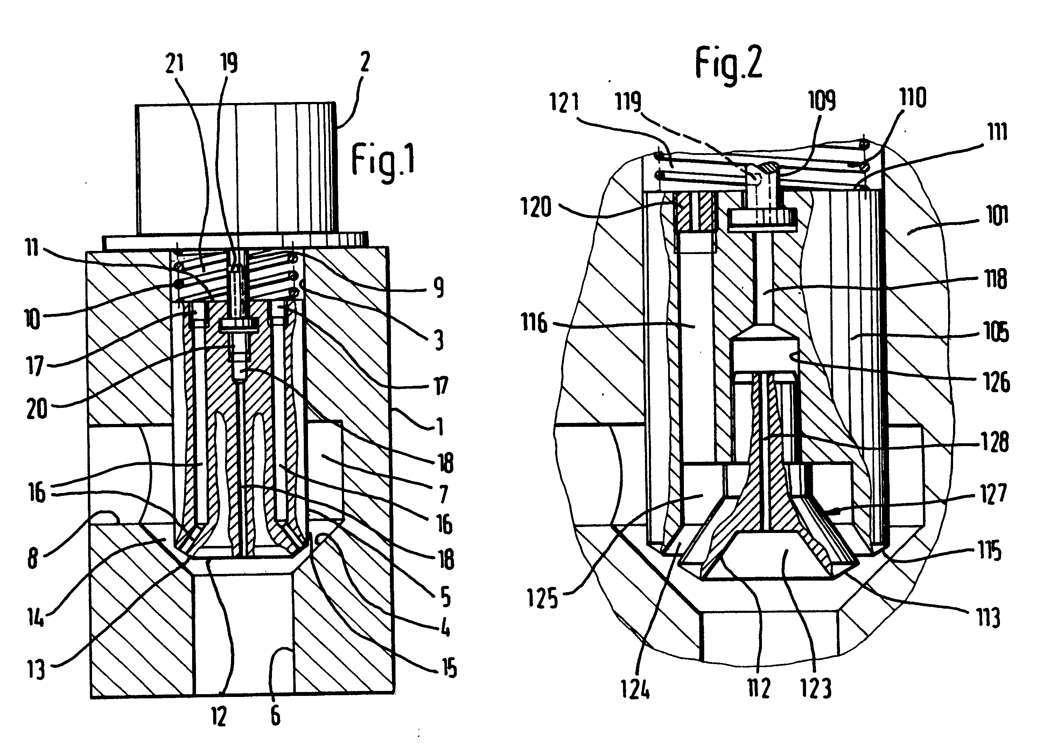

Wie Fig. 1 zeigt, ist der Durchmesser der planen Stirnseite 12 des Kolbens 5 kleiner als der Kolbendurchmesser. Den Übergang von der Stirnseite 12 zur zylindrischen Außenmantelfläche des Kolbens 5 bildet eine Konusfläche 13, deren Konuswinkel so gewählt ist, daß der einerseits von der Konusfläche 13 und andererseits vom Sitz 4 begrenzte Ringkanal 14 sich von der Steuerkante 15 gegen den Kanal 6 hin erweitert. Die Steuerkante 15 wird durch die Konusfläche 13 und die sich anschließende Mantelfläche des Kolbens 5 gebildet.

In der Konusfläche 13 münden lotrecht zu ihr an diametral liegenden Stellen zwei Bohrungen 16, die im Abstand von der Konusfläche 13 in einen zur Kolbenlängsachse parallelen Verlauf übergehen. Die andere Mündungsöffnung der beiden Bohrungen 16 liegt an diametralen Stellen in der Rückseite 11 des Kolbens 5. Der diesen beiden Mündungsöffnungen zugeordnete Endabschnitt der Bohrung 16 ist als eine erweiterte Gewindebohrung ausgeführt, um je eine Blende 17 auswechselbar einschrauben zu können deren den Blendenkörper zentral durchdringende Bohrung den wirksamen Querschnitt der Bohrung 16 bestimmt. Dies ermöglicht in einfacher Weise, den mittels der Bohrungen 16 erfaßten und in den zwischen der Rückseite 11 des Kolbens 5 und dem Betätigungsmechanismus 2 liegenden Raum 21 übertragenen Druck zu gewichten. Eine zentrale Längsbohrung 18 des Kolbens mündet einerseits in der Stirnseite 12 und dient andererseits zur Aufnahme der Verbindungsstange 9, die von ihrem im Kolben 5 liegenden Ende her mit einer zentralen Sacklochbohrung versehen ist, an die sich eine Radialbohrung 19 anschließt. In den an die Rückseite 11 anschließenden Raum 21 wird deshalb auch der an der Stirnseite 12 des Kolbens 5 herrschende Druck übertragen. Mittels einer auswechselbar in die Längsbohrung 18 eingesetzten Blende 20 läßt sich dieser Druck für die Bildung des im Raum 21 herrschenden Mischdruckes gewichten.

Da der Druck in der Stirnseite 11 des Kolbens 5 größer ist als in dem von der Steuerkante 15 und der Konusfläche 13 beeinflußte Strömungsquerschnitt, fließt Druckmittel durch die Längsbohrung 18 und die Radialbohrung 19 in den Raum 21 und von dort durch die Bohrungen 16 zu dem von der Konusfläche 13 begrenzten Ringraum 14. Hierdurch wird nicht nur im Raum 21 der Mischdruck aufgebaut, sondern das sich im Raum 21 sammelnde Fluid ständig ausgetauscht und entlüftet. Durch die Wahl der Blenden 17 und 20 und der Durchmesser der diese Blenden enthaltenden Bohrungen kann der Durckmittelzufluß zum Raum 21 und der Abfluß so beeinflußt und damit der Mischdruck im Raum 21 so eingestellt werden, daß die an der Konusfläche 13 angreifende Strömungskraft ausgeglichen, überkompensiert oder unterkompensiert wird.

Die Größe der Blenden 17 und 20 oder der Durchmesser der Bohrungen 16 sowie 18 und 19 wird vorteilhafterweise durch Versuche ermittelt. Je kleiner die Blende 20 der Längsbohrung 18 und je größer die Blende 17 in der Bohrung 16 gewählt wird, um so geringer ist der Mischdruck im Raum 21 und um so mehr wird die Strömungskraft kompensiert.

Steigt der Volumenstrom an, dann vergrößert sich auch die Differenz zwischen dem an der Stirnseite 12 herrschenden Druck und dem Druck im Strömungsquerschnitt zwischen der Konusfläche 13 und dem Sitz 4. Damit sinkt der Mischdruck im Raum 21 ab. Mit Hilfe der Blenden 17 und 20 kann diese Druckabsenkung so gewählt werden, daß die höhere Strömungskraft ausgeglichen, überkompensiert oder unterkompensiert wird. Die durch die Konusfläche 13 gebildete Schräge trägt dazu bei, eine stabile Druckbestimmung in dem von der Steuerkante 15 beeinflußten Strömungsquerschnitt zu ermöglichen.

Im Gegensatz zum Ausführungsbeispiel gemäß Fig. 1, das besonders vorteilhaft ist für einen relativ kleinen Volumenstrom durch die Bohrungen 16 und 18, ist das Ausführungsbeispiel gemäß Fig. 2 besonders vorteilhaft, wenn die zur Bildung des Mischdruckes erforderlichen Volumenströme größer sein sollen oder müssen. Der Kolben 105 der in einem Ventilgehäuse angeordnet ist, das wie das Ventilgehäuse 1 ausgebildet ist und der an seiner Rückseite 111 ebenfalls von einer Schraubendruckfeder 110 beaufschlagt sowie hier mit einer Verbindungsstange 109 eines nicht dargestellten Ventilbetätigungsmechanismuses mechanisch verbunden ist, weist eine Konusfläche 113 auf, die zusammen mit der zylindrischen Mantelfläche des Kolbens 105 die Steuerkante 115 bildet. Andererseits schließt sich die Konusfläche 113 an die Stirnseite 112 an, die durch eine zentrale, sich in das Innere des Kolbens 105 hinein konisch verjüngende Vertiefung 123 gebildet ist.

Im Abstand von der Steuerkante 115 mündet in die Konusfläche 113 ein Ringkanal 124, dessen Längsachse lotrecht auf der Konusfläche 113 steht. Im Kolbeninneren schließt sich an den Ringkanal 124 ein zylindrischer Verteilerringraum 125 an, in den eine parallel zur Längsachse des Kolbens 105 verlaufende Längsbohrung 116 mündet, welche den Ringkanal 124 mit dem Raum 121 zwischen der Rückseite 111 des Kolbens 105 und dem nicht dargestellten Betätigungsmechanismus verbindet. Eine in die Längsbohrung 116 auswechselbar eingeschraubte Blende ist mit 120 bezeichnet.

Der Ringkanal 124 bildet einen äußeren, der Verteilerringraum 125 einen mittleren Abschnitt einer im Kolben 105 vorgesehenen, zentralen Außnehmung. An den Verteilerringraum 125 schließt sich gleichachsig mit wesentlich kleinerem Durchmesser ein innerer Abschnitt 126 an, von dem aus sich bis zur Rückseite 111 eine Längsbohrung 118 erstreckt. Diese ist in die Verbindungsstange 109 hinein fortgesetzt und schließt sich dort an eine Querbohrung 119 an, welche in den Raum 121 mündet. In den inneren Abschnitt 126 ist ein Zapfen eines als Ganzes mit 127 bezeichneten Koblenteiles eingepreßt, dessen Mittelabschnitt die innere Begrenzung des Verteilerringraumes 125 und dessen mit der konischen Vertiefung 123 versehener äußerer Endabschnitt die innere Begrenzung des Ringkanals 124 bildet. Durch diese gebaute Ausbildung des Kolbens 105 läßt sich problemlos der Ringkanal 124 sowie der Verteilerringraum 125 realisieren. Der Teil 127 ist mit einer zentralen Durchgangsbohrung 128 versehen, die zusammen mit der Längsbohrung 118 und der Radialbohrung 119 die Verbindung zwischen der Vertiefung 123 und dem Raum 121 herstellt.

Wie bei dem Ausführungsbeispiel gemäß Fig. 1 wird im Raum 121 ein Mischdruck erzeugt, mit Hilfe dessen die sich mit der Größe des Volumenstromes ändernde Strömungskraft ausgeglichen, unterkompensiert oder überkompensiert werden kann.

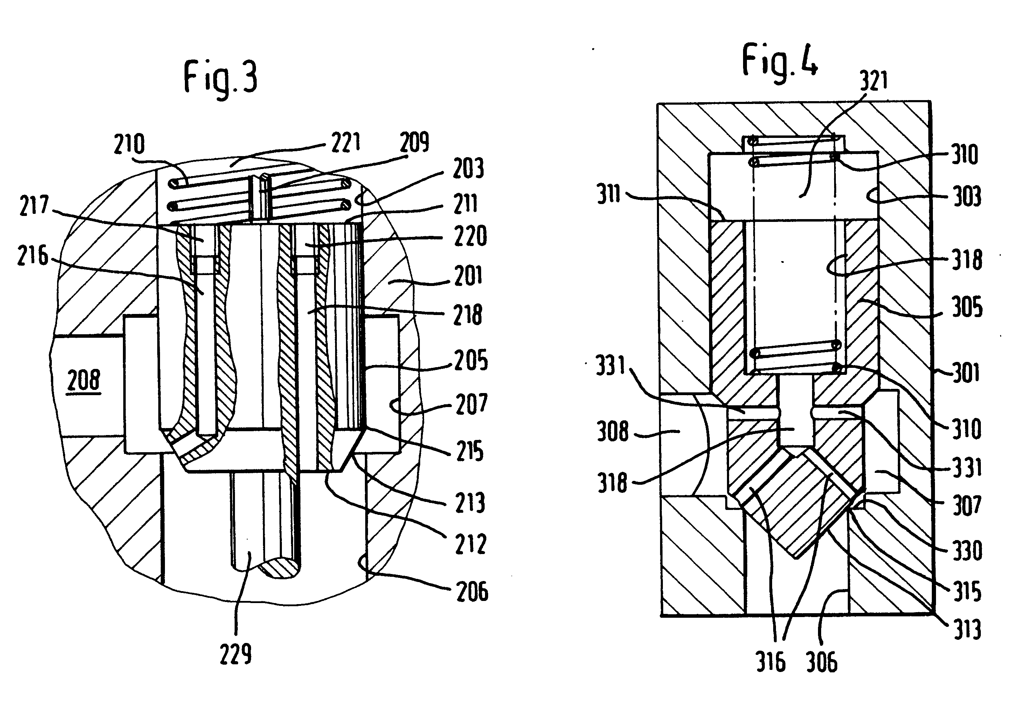

Bei dem in Fig. 3 dargestellten Hydraulikventil handelt es sich um ein Kolbenschieberventil. Der Kanal 206 des Ventilgehäuses 201 der in der Verschieberichtung des Kolbens 205 verläuft und durch den das Druckmittel ein- oder ausströmt, hat deshalb den gleichen Durchmesser wie die gleichachsig zu ihm angeordnete zentrale Längsbohrung 203, in welcher der Kolben 205 längsverschiebbar geführt ist. Ferner schließt sich der im Durchmesser größere Ringraum 207, in den radial der Kanal 208 mündet, unmittelbar an den Kanal 206 an. Zwischen der Steuerkante 215 des Kolbens 205 und seiner planen Stirnseite 212 ist wie bei dem Ausführungsbeispiel gemäß Fig. 1 eine Konusfläche 213 vorgesehen. In ihr mündet der lotrecht zu ihr verlaufende Endabschnitt einer im übrigen parallel zur Kolbenlängsachse verlaufende Bohrung 216, die andererseits in der Rückseite 211 des Kolbens 205 mündet. Diametral zur Bohrung 216 liegt eine sich von der Rückseite 211 bis zur Stirnseite 212 erstreckende Längsbohrung 218. In die von der Rückseite 211 her zugänglichen Endabschnitte der beiden Bohrungen 216 und 218 ist je eine Blende 217 bzw. 220 auswechselbar eingeschraubt.

An seiner Stirnseite 212 ist der Kolben 205 mit einer Schieberstange 229, an seiner Rückseite 211, an der eine Schraubendruckfeder 210 anliegt, mit einer Verbindungsstange 209 mechanisch verbunden.

Auch bei diesem Ausführungsbeispiel wird in dem an die Rückseite 211 angrenzenden Raum 221 ein Mischdruck erzeugt, der mit Hilfe der Blenden 217 und 220 so eingestellt werden kann, daß er die Strömungskraft kompensiert, überkompensiert oder unterkompensiert. Selbstverständlich könnte auch bei diesem Ausführungsbeispiel die Gewichtung der den Mischdruck bildenden Druckkomponenten dadurch bewirkt werden, daß die Bohrungen 216 und 218 mit entsprechenden Durchmessern ausgeführt werden. Blenden sind jedoch insofern vorteilhaft, als sie eine Änderung der Gewichtung und damit eine Anpaßung des Mischdruckes an die Erfordernisse problemlos ermöglichen.

Das Ausführungsbeispiel gemäß Fig. 4, bei dem es sich um ein Druckbegrenzungsventil handelt, zeigt, daß die erfindungsgemäße Strömungskraftkompensation auch für solche Hydraulikventile vorteilhaft ist, die nur eine Feder, im Ausführungsbeispiel die Schraubendruckfeder 310, als Betätigungsmechanik für ihren Ventilkörper haben, der, wie Fig. 4 zeigt, als Kolben 305 ausgebildet ist. Dieser Kolben 305 ist in einer zentralen Sacklochbohrung 303 des Ventilgehäuses 301 längsverschiebbar angeordnet. In diese Sacklochbohrung 303 mündet im Abstand von ihrem offenen Ende in radialer Richtung ein Kanal 308, durch den das Druckmittel im Falle eines Überdruckes austritt.

Im Bereich der Einmündung des Kanals 308 ist der Durchmesser der Sacklochbohrung 303 zur Bildung eines Ringraumes 307 im Vergleich zu den beiden angrenzenden Abschnitten vergrößert.

Der sich an den Ringraum 307 zum offenen Ende der Sacklochbohrung 303 erstreckende Abschnitt 306, der im Ausführungsbeispiel einen kleineren Durchmesser hat als der sich zum verschlossenen Ende hin erstreckende Abschnitt, bildet zusammen mit einer zum Ringraum 307 hin offenen Kehle 330, die Steuerkante 315. Wie Fig. 4 zeigt, ist zwischen der am Übergang von der Kehle 330 zum Ringraum 307 gebildeten Kante und dem Kolben 305 auch dann ein Zwischenraum vorhanden, wenn der Kolben 305 an der Steuerkante 315 anliegt.

Der für die Anlage an der Steuerkante 315 bestimmte Endabschnitt des Kolbens 305 hat eine kegelförmige Außenmantelfläche 313. An diese schließt sich eine zylindrische Mantelfläche des im Ringraum 307 liegenden Abschnitts an. Auf diesen Abschnitt folgt eine konische Übergangszone, an die sich die zylindrische Außenmantelfläche des andererseits durch die Rückseite 311 des Kolbens 305 begrenzten hinteren Endabschnittes anschließt. Dieser hintere Endabschnitt, der in der Sacklochbohrung 303 geführt ist, ist mit einer zentralen Längsbohrung 318 versehen, welche im Abstand von der Rückseite 311 eine Schulter bildet, an welcher das eine Ende der vorgspannten Schraubenfeder 310 anliegt. Das andere Ende greift an eine im Boden des Ventilgehäuses 301 vorgesehene Vertiefung ein.

Die zentrale Längsbohrung 318 erstreckt sich von der Schulter aus in den im Ringraum 307 liegenden Abschnitt des Kolbens 305 hinein. Dort münden in sie zwei diamteral angeodnete, radial verlaufende Bohrungen 331, die andererseits in der zylindrischen Mantelfläche des im Ringraum 307 liegenden Abschnitts des Kolbens 305 dort münden, wo sich an die zylindrische Mantelfläche die konische Zone anschließt. Außerdem münden, wie Fig. 4 zeigt, in die zentrale Längsbohrung 318 zwei diametral angeordnete Bohrungen 316, deren Längsachsen lotrecht auf der Kegelfläche 313 stehen, in der sie je an einer Stelle münden, die auf die Kehle 330 ausgerichtet ist, wenn der Kolben 305 an der Steuerkante 315 anliegt.

Wenn infolge eine Überdruckes der Kolben 305 von der Steuerkante 315 abgehoben hat und Druckmittel zwischen der Steuerkante 315 und der Kegelfläche 313 hindurch in den Ringraum 307 strömt, wird der in diesem Strömungsquerschnitt herrschende Druck durch die Bohrungen 316 hindurch in die zentrale Längsbohrung 318 und von dort in den Raum 321 übertragen, der sich an die Rückseite 311 des Kolbens 305 anschließt. In diesen Raum wird aber auch, und zwar über die Bohrungen 331 derjenige Druck in den Raum 321 übertragen, welcher im Ringraum 307 und dem zu einem Tank führenden Kanal 308 herrscht. Im Raum 321 wird dadurch ein Mischdruck erzeugt, mit Hilfe dessen durch die Wahl der Bohrungsdurchmesser für die Bohrungen 316 und 331 oder mit Hilfe von in diese Bohrungen eingesetzten Blenden die auf den Kolben 305 wirkende Strömungskraft unterkompensiert, kompensiert oder überkompensiert werden kann. Hierdurch läßt sich eine Verschlechterung der Kennlinie des Ventils vermeiden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1) Verfahren zur Kompensation von auf den Kolben eines Hydraulikventils wirkenden Strömungskräften einschließlich der an der Steuerkante des Kolbens auftretenden Kräfte, bei dem an der Rückseite des Kolbens ein vom Druck an seiner der Steuerkante benachbarten Außenfläche abhängiger, zumindest eine Kraftkomponente in Schließrichtung ergebender Druck erzeugt wird, dadurch gekennzeichnet, daß der an der Rückseite des Kolbens herrschende Druck als ein Mischdruck erzeugt wird, der auch von demjenigen Druck abhängig ist, der in dem von der Steuerkante des Kolbens beeinflußten Strömungsquerschnitt herrscht.

2) Verfahren nach Anspruch 1, dadurch gekennzeichnet, daß bei der Bildung des Mischdruckes zumindest einer der Drücke gewichtet wird, indem das von der der Steuerkante benachbarten Außenfläche zur Rückseit des Kolbens und von dort zu dem von der Steuerkante beeinflußten Strömungsquerschnitt fließende Fluid zumindest auf einem der beiden Wege gedrosselt wird, so daß der Druck am Ende des weniger gedrosselten Weges stärkeren Einfluß auf die Größe des Mischdruckes erhält.

3) Hydraulikventil zur Durchführung des Verfahrens gemäß Anspruch 1 mit einem von einer Betätigungseinrichtung verschiebbaren Kolben, der zusammen mit einer Steuerkante eine Einstellung eines Strömungsquerschnittes für den Durchfluß eines Fluids ermöglicht und mit wenigstens zwei im Kolben vorgesehenen Kanälen versehen ist, die beide einerseits in derjenigen Kolbenfläche münden, welche zusammen mit einem den Kolben enthaltenden Gehäuse einen sich an die Kolbenrückseite anschließenden Raum begrenzt, und der eine Kanal andererseits in einer Steuerkante benachbarten Kolbenaußenfläche mündet, dadurch gekennzeichnet, daß der andere Kanal (16; 116;

216; 316) andererseits in einer kolbenseitig den mittels der Steuerkante (15; 115; 215; 315) veränderbaren Strömungsquerschnitt begrenzenden Fläche (13; 113; 213; 313) mündet.

4. Ventil nach Anspruch 3, gekennzeichnet durch in die Kanäle (16, 18; 116, 118; 216, 218; 316, 318; 331) vorzugsweise auswechselbar einsetzbare Blenden (17, 20; 120; 217, 220).

5. Ventil nach Anspruch 3 oder 4, dadurch gekennzeichnet, daß die kolbenseitig den veränderbaren Strömungsquerschnitt begrenzende Fläche eine Konusfläche (13; 113; 213) oder eine Kegelfläche (313) ist.

6. Ventil nach Anspruch 5, dadurch gekennzeichnet, daß der Kegelwinkel der Konusfläche (13; 113; 213) oder der Kegelfläche (313) sich vom Konuswinkel einer konischen Sitzfläche (4) des Gehäuses (1; 101; 201) unterscheidet.

7. Ventil nach Anspruch 5 oder 6, dadurch gekennzeichnet, daß die Konusfläche (13; 113; 213) zwischen der Steuerkante (15; 115; 215) und der Stirnfläche (12; 123; 212) des Kolbens (5; 105; 205) liegt, in welcher wenigstens einer der Kanäle (16, 18; 116, 118, 128; 216, 218) mündet.

8. Ventil nach Anspruch 5, dadurch gekennzeichnet, daß die Steuerkante (315) und eine im Abstand von dieser zu ihr konzentrisch angeordnete zweite Kante durch Materialpartien des Gehäuses (301) gebildet sind, zwischen denen eine nutartige Vertiefung (330) vorgesehen ist, und daß jeder der in der Kegelfläche (313) vorgesehenen Kanalmündungen auf dem Bereich zwischen der Steuerkante (315) und der zweiten Kante ausgerichtet ist.

9. Ventil nach einem der Ansprüche 3 bis 8, dadurch gekennzeichnet, daß bei mehreren in der Stirnseite (12; 212) des Kolbens (5; 205) oder in der kolbenseitig den veränderbaren Strömungsquerschnitt begrenzenden Fläche (13; 213; 313) mündenden Kanälen (16; 316) die Mündungsöffnungen gleichmäßig über den Umfang verteilt angeordnet sind.

10. Ventil nach einem der Ansprüche 3 bis 9, gekennzeichnet durch eine zum Kolben (105) konzentrische und zu der den veränderbaren Strömungsquerschnitt kolbenseitig begrenzenden Fläche (113) hin offenen Ringnut (124), welche den Endabschnitt eines der Kanäle (116) bildet.

11. Ventil nach Anspruch 10, dadurch gekennzeichnet, daß die Ringnut (124) sich an einen im Kolbeninneren liegenden, vorzugsweise ringförmigen Verteilerraum (125) anschließt, in den wenigstens eine den Kanal vervollständigende Bohrung (116) mündet.

12. Ventil nach Anspruch 10 oder 11, dadurch gekennzeichnet, daß die Ringnut (124) einerseits durch eine Wandung einer Ausnehmung des Kolbens (105) und andererseits durch eine Wandung eines in diese Ausnehmung eingesetzten Teiles (127) begrenzt ist.

13. Ventil nach einem der Ansprüche 3 bis 12, dadurch gekennzeichnet, daß der Kolben (105) an seiner Stirnseite mit einer vorzugsweise kegelstumpfförmigen Vertiefung (123) versehen ist, und daß im Grunde dieser Vertiefung (123) die Mündungsöffnung von jedem in der Stirnfläche mündenden Kanal (118, 128) liegt.

Fig.1

Fig.2

EP 0 378 772 A1

Fig. 4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 622 992 (SUTHERLAND) <br> * Ansprüche 1-8; Figuren 1,5 * <br> --- | 1-3 | F 16 K 25/02 <br> F 16 K 39/00 |
| A | FR-A-2 428 777 (POCLAIN) <br> * Ansprüche 1-3; Figur 1 * <br> --- | 3,5,6,7 | |
| A | AT-B- 345 048 (BARABO OTTO) <br> --- | | |
| A | FR-A-2 247 670 (GAZ DE FRANCE) <br> ----- | | |

RECHERCHIERTE SACHGEBIETE (Int. Cl.5)

F 16 K

Der vorliegende Recherchenbericht wurde für alle Patentansprüche erstellt

| Recherchenort | Abschlußdatum der Recherche | Prüfer |
|---|---|---|
| DEN HAAG | 16-03-1990 | FONSECA Y FERNANDEZ H. |